(19) Europäisches Patentamt
European Patent Office
Office européen des brevets

(11) **EP 3 580 538 B1**

(12) **EUROPEAN PATENT SPECIFICATION**

(45) Date of publication and mention of the grant of the patent:
**11.11.2020 Bulletin 2020/46**

(21) Application number: **18707427.3**

(22) Date of filing: **08.02.2018**

(51) Int Cl.:
*G01K 3/04* *(2006.01)*       *G01N 31/22* *(2006.01)*
*C09K 11/77* *(2006.01)*

(86) International application number:
**PCT/IB2018/050772**

(87) International publication number:
**WO 2018/146606 (16.08.2018 Gazette 2018/33)**

(54) **LABEL-SHAPED DEVICE ADAPTED TO BE APPLIED ONTO AN OBJECT FOR MONITORING THE TIME TREND OF THE TEMPERATURE OF THE OBJECT, AND METHOD FOR SAID MONITORING**

ETIKETTFÖRMIGE VORRICHTUNG ZUM AUFTRAGEN AUF EIN OBJEKT ZUR ÜBERWACHUNG DES ZEITTRENDS DER TEMPERATUR DES OBJEKTS UND VERFAHREN ZUR BESAGTEN ÜBERWACHUNG

DISPOSITIF EN FORME D'ÉTIQUETTE ADAPTÉ POUR ÊTRE APPLIQUÉ SUR UN OBJET POUR SURVEILLER L'ÉVOLUTION DANS LE TEMPS DE LA TEMPÉRATURE DE L'OBJET, ET PROCÉDÉ POUR LADITE SURVEILLANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.02.2017 IT 201700015111**

(43) Date of publication of application:
**18.12.2019 Bulletin 2019/51**

(73) Proprietor: **Università Degli Studi di Cagliari
09124 Cagliari (IT)**

(72) Inventors:
• **RICCI, Pier Carlo**
  **I-09124 Cagliari (CA) (IT)**
• **CHIRIU, Daniele**
  **I-09124 Cagliari (IT)**
• **CARBONARO, Carlo Maria**
  **I-09124 Cagliari (IT)**

(74) Representative: **Primiceri, Maria Vittoria
Praxi Intellectual Property S.p.A.
Via Leonida Bissolati, 20
00187 Roma (IT)**

(56) References cited:
**EP-A2- 2 271 727     US-A1- 2010 074 297**

• **MIHOKOVA E ET AL: "Thermally Stimulated Luminescence in Ce-Doped Yttrium Oxyorthosilicate", IEEE TRANSACTIONS ON NUCLEAR SCIENCE, IEEE SERVICE CENTER, NEW YORK, NY, US, vol. 59, no. 5, 1 October 2012 (2012-10-01), pages 2085-2088, XP011474407, ISSN: 0018-9499, DOI: 10.1109/TNS.2012.2190521**
• **COOKE D W ET AL: "Intrinsic trapping sites in rare-earth and yttrium oxyorthosilicates", JOURNAL OF APPLIED PHYSICS, AMERICAN INSTITUTE OF PHYSICS, US, vol. 86, no. 9, 1 November 1999 (1999-11-01), pages 5308-5310, XP012048955, ISSN: 0021-8979, DOI: 10.1063/1.371518**

**Description**

Field of the invention

The present invention relates to the field of techniques for detecting temperature variations to which delicate materials may be subjected, especially during storage and transport operations, and particularly relates to a label-shaped device adapted to be applied onto an object for monitoring the time trend of the temperature of the object, and a method for said monitoring.

Background art

A need is particularly felt for monitoring the time trend of the temperature of objects that are easily subject to deterioration, such as food or medicines, especially when they are enclosed in containers for transport and storage operations.

Every day, millions of crates of food products are distributed to supermarkets, restaurants, hospitals, universities and other catering destinations. Efficient and healthy transport of such products from producer to consumer requires an elaborate, highly connected and coordinated distribution network. Distributors act as intermediaries between producers and catering operators and/or consumers, transporting and delivering large quantities of products, crates and, finally, individual units.

Although the distribution chain is not much taken into account in the evaluation of safety conditions, the safety measures adopted by distributors are as important as the Hazard Analysis and Critical Control Point (HACCP) system planned by the supplier or correct preparation of the products by the producer.

In the world, food is produced to fulfil the requirements of billions of people, but one third or more of the food produced is lost or wasted. Wasted food also has an important impact on the environment: it has been estimated, in fact, that the emission of $CO_2$ caused by wasted food amounts to 3.3 billons of tons. If wasted food were a geographic region, it would be third in the list of the regions producing gases that cause the greenhouse effect, after China and the USA.

Control over the cold chain in the different steps of food production and distribution is fundamental for correctly preserving food and avoiding wastage thereof. Moreover, the possibility of controlling the cold chain in an economical and environmentally-friendly manner improves safety for both the producer and the consumer, and may act as market booster (according to the formula: more control + more safety = more trust and more market).

Various types of devices for monitoring the temperature of objects are already known, including solutions based on different physical/chemical effects obtained at predefined target temperatures, which however suffer from several drawbacks:

- Magnetic labels, which however imply irreversible loss of magnetic properties;
- Organic labels, which however imply irreversible changes in colour;
- Shape labels, which however imply irreversible variations in shape-memory compounds.

Most of the solutions currently available are based on visible and irreversible physical/chemical processes associated with a predefined temperature.

Distribution chain operators are generally sceptical about large-scale use of these temperature/time indicators, due to their fast irreversible response when the threshold temperature is exceeded. In fact, accidental exposition of the product to high temperatures, even of short duration (e.g. when the package comes in contact with the consumer's hand), will cause, in current time temperature indicators (TTI), the start of the irreversible process they are based on. As a matter of example, reference is made to US2010/074297 A1, which discloses a time-temperature indicator (TTI) whose active material is a non-metallic material.

Summary of the invention

It is therefore one object of the invention to propose a label-shaped device adapted to be applied onto an object for monitoring the time trend of the temperature of the object, and a method for said monitoring, which are aimed at overcoming all of the above-mentioned drawbacks.

The present invention relates to a label-shaped device according to independent claim 1 adapted to be applied onto an object for monitoring the time trend of the temperature of the object.

The present invention also relates to a method according to independent claim 6 for monitoring the time trend of the temperature of an object through the use of said device.

Brief description of the drawings

Further objects and advantages of the present invention will become apparent from the following detailed description of a preferred embodiment (and variants) thereof referring to the annexed drawings, which are only supplied by way of non-limiting example, wherein:

Figures 1 and 2 show an example of a device according to the invention in a side view and a projection view, respectively;

Figure 3 shows an example of a graph illustrating how the mean temperature of an object can be calculated;

Figure 4 shows a flat band diagram of the energetic levels of the active material;

Figure 5 shows an example of the time trend of the optically stimulated luminescence (OSL) obtained from the active material;

Figure 6 shows the directions of the write and read operations of the active material.

In the drawings, the same reference numerals and letters identify the same items or components.

Detailed description

The invention concerns a label-shaped device adapted to be applied onto an object for monitoring the time trend of the temperature of the object. The object may be, for example, a package containing delicate material.

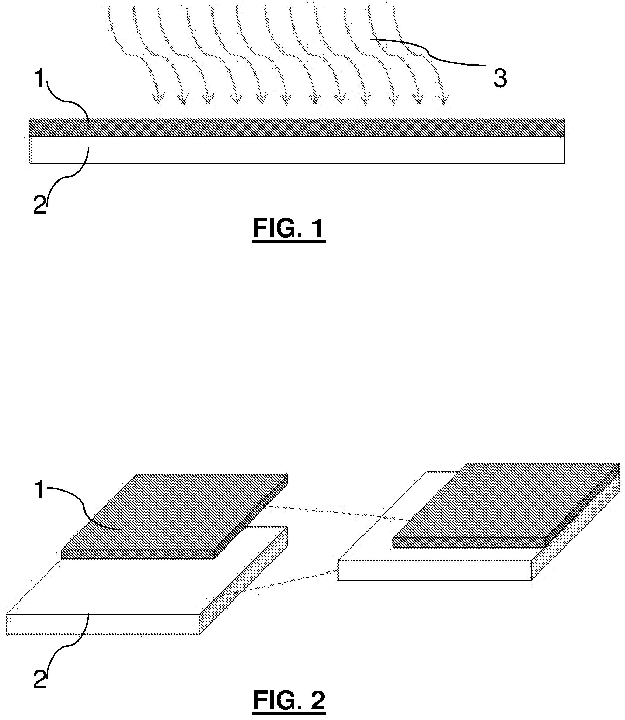

As shown in Figures 1 and 2, the label is shaped like a parallelepiped and comprises a support substrate 1 and a layer of active material 2 applied onto the support.

Substrate materials may be of different types, e.g.:

- Flexible plastic (e.g. PET, polystyrene, cellophane, etc.);
- Paper;
- Thin metal (e.g. aluminium foil).

The substrate may be applied onto the object by means of an adhesive, or it may be part of the object to be monitored, e.g. part of the container.

The layer of active material may be applied onto the substrate by means of a binder.

The monitoring is based on two check systems (indicators) created by means of the active material of the label. The first indicator provides immediate visual information associated with the progressive change in colour related to the threshold temperature (natural fading). The second indicator is based on the optically stimulated luminescence response (OSL) related to the actual temperature/time condition at which the object has been kept during transport and storage, e.g. along a distribution (storage and transport) chain.

The visual indicator provides immediate information mainly intended for the final consumer, or it may also be used for quickly checking the product preservation characteristics at the retailer's. The optical indicator returns several pieces of information about the preservation condition along the distribution chain. The label has no electric or electronic parts, and the information is recorded because of the structural/optical properties of the active material it is made of.

The active material applied onto the label is based on indicators made of inorganic materials, mainly oxyorthosilicates and/or barium halide salts. The matrices of said materials are doped with rare earths and/or transition metals.

In some possible variants, the active material comprises one of said inorganic materials, whereas in other variants solid solutions of a number of said materials may be obtained, each having different characteristics (e.g. different natural fading time or emission spectral response), for the purpose of improving the characteristics of the device.

As aforesaid, the temperature monitoring system is based on two types of indicators, which provide different options and functionalities:

- The visual indicator behaves in such a way as to change gradually in colour as a function of temperature.
- The optical indicator provides the complete history of the temperature and time conditions of the product.

*Visual indicator*

This type of indicator is based on the progressive variation in the reflectivity of the material as a function of time and temperature. If the threshold temperature is exceeded, the variation occurs more rapidly.

Optionally, a calibrated colour scale (dependent on temperature and time) is arranged beside the indicator to make it easier to read by the consumer, helping the latter understand if the threshold temperature or the preservation time (at a fixed temperature) has been exceeded.

*Optical indicator*

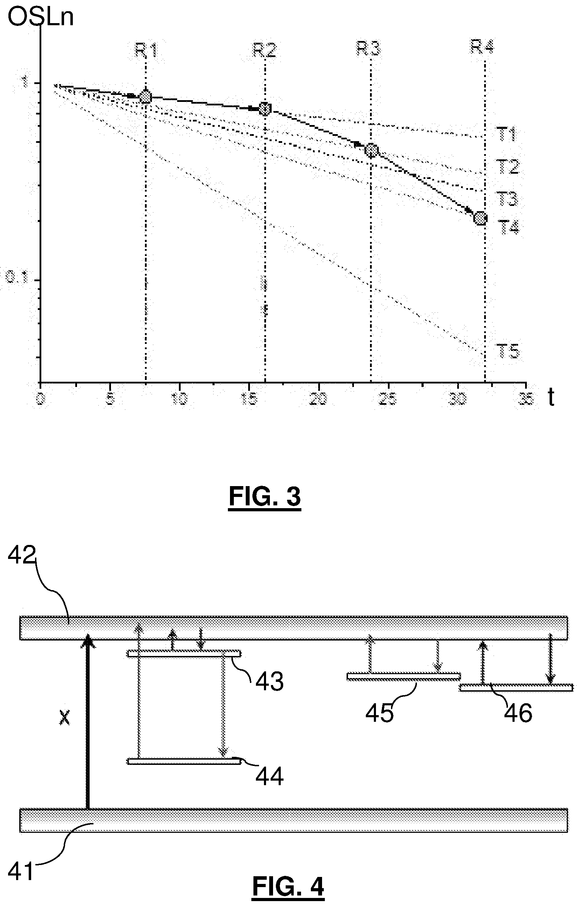

The basic idea is to use in an inverse manner the concept, the experimental technique and the method of analysis that are typical of optically stimulated luminescence (OSL), which is commonly used within the sphere of dosimetry. In fact, by starting from the dose of absorbed radiation (write procedure described below) and by measuring the OSL response after a predefined time interval, it is possible to estimate the mean temperature of the product. The graph shown in Figure 3 indicates how the mean temperature of an object can be calculated (in this figure, in four successive steps R1 - R4 during the time t on the abscissas, with a normalized intensity value OSLn), knowing the amount of energy stored in the material at the charging or writing stage, the starting amount of energy (label activation), and the natural fading of the material of the indicator. Likewise, once the temperature is set, it is possible to calculate the time elapsed since the write procedure.

By appropriately selecting the time interval between successive readings, it is possible to accurately monitor the actual preservation temperature of the products inserted in the containers.

The example illustrated in Figure 3 shows how it is possible to determine the complete history of the product and the exact temperature at which it has been preserved, identifying the time interval in which its temperature underwent variations. Knowing the full history of the product is useful to accurately predict the degradation of food as a consequence of, for example, the development of bacteria.

Oxyorthosilicates and barium fluorohalides are currently being used mainly as scintillators for ionizing radiation and digital radiography. The most important characteristic that they must have for such applications is that they must respond as quickly as possible to environmental excitation.

The basic idea of the present invention is, on the contrary, to bring to the limit all those causes that would delay emission and should be removed in a perfect scintillator.

For the effect to be really useful, it is necessary to have a deep knowledge of the causes that generated it and of all the factors that may help control it.

The flat band diagram of the energetic levels of said materials can be summarized in Figure 4.

Given an initial excitation, indicated in Figure 4 by an arrow, which in this case consists of X-rays, but may be any electromagnetic radiation with energy exceeding the gap of the materials, i.e. higher than a minimum value dependent on the difference between energetic levels of the molecular structure of the material, free carriers in conduction band 42 (electrons) and in valence band 41 (holes) will be created. In the absence of any supplementary levels, the system will simply be constituted by the matrix recombination levels through recombination of a bound (or self-trapped) exciton or a free exciton. The insertion of a suitable element into the matrix will create new radiative and more efficient recombination channels (emitter element). In particular, for example, the addition of cerium atoms into the initial stoichiometry will provide, as recombination channels, the transitions from the 5d states (43) to the 4f levels (44) of the 3+ ion. In lutetium and yttrium oxyorthosilicates, such emissions will be spectrally located between 400 and 500 nm, with decay times of less than 50 ns. In barium halides, $Eu^{3+}$ is often used as a luminescent and doping element.

A system consisting of these elements alone is the scheme of an ideal scintillator.

Defects related to the growth process or to the presence of other elements may provide secondary recombination channels (energetic levels 45, 46) which are often non-radiative or may have spectral and time-related characteristics that are antagonistic to those of the emitter element.

In particular, if the energetic levels of the impurities are located in proximity to the conduction band and have long lifetimes compared to the recombination times of the emitter element, they can generate in the radiative emission a long persistence of luminous radiation, by exploiting again the channels of the emitter itself. The charges trapped in said energetic levels 45, 46 (defects) will again move into the conduction band, with a probability following Boltzmann statistics, so that they can be captured again by other traps, even with different energy, or radiatively recombine in the centres of the emitter element. The observed emission may last a very long time after the initial excitation, depending on the density and characteristics of the traps of the crystal.

Based on the above observations, it is apparent that, if it were possible to control depth, level density and, most importantly, the photostimulation mechanism, devices having almost unlimited information capacity could be created, such information being understood in the binary sense as localized initial excitations.

The time during which the emitter centres stay trapped also depends on, in addition to the elements themselves in the matrix (stoichiometry), the preservation time and temperature conditions to be measured.

The characteristics that these levels must have will be differentiated according to the characteristics required for the various applications.

Further information will be provided below about the physical phenomena at the basis of the natural trap emptying process (natural fading).

The probability P(T) that the trapped charges will be released depends on:

- trap depth $\Delta E$: the deeper the trap, the higher the energy required for releasing the charges;

- temperature: the higher the temperature, the higher the probability that the charges will be released. For shallow traps, even room temperature may suffice for de-trapping, due to the phosphorescence phenomenon.

The probability P(T) is given by the following relation:

$$P(T) = s\ \exp(-\Delta E/kT)$$

where:

- k is the Boltzmann constant (8.617x10-5 eV K-1),
- T is the absolute temperature (in Kelvin degrees),
- s is the frequency factor, which represents the number of times per second that the electron tries to escape from the trap (order of magnitude: $10^{10}$-$10^{12}$ s$^{-1}$).

As can be seen, the probability that the charges will be released from the traps increases exponentially with temperature.

Knowing that curve, it will therefore be possible to go back to the actual hold time/temperature of the crystal composing the active material of the device.

The emission resulting from the hold conditions will generate a different colour depending on the time and temperature parameters at which the object has been kept, giving an immediate visible response.

The time and temperature characteristics can also be read by optically stimulated luminescence (OSL), giving accurate information about the (time and temperature) preservation conditions.

For this purpose, in addition to an electromagnetic radiation beam for writing and initializing the material (oxyorthosilicate or barium fluorohalides), it is also necessary to provide a second beam for the optical excitation of the trapped carriers.

In particular, a "writer" will be any ray incident on the active material with energy photons exceeding the energy between the valence band and the conduction band of the materials involved (e.g. approx. 6.2 eV at room temperature). For example (Figure 1), the active material can be charged with an electromagnetic radiation 3 having a wavelength λ< 400 nm. Moreover, considering that the energetic levels characteristic of doping or co-doping rare earths are located within the forbidden band of the matrix, the lower limit of the energy capable of generating information is determined by the energy difference between the fundamental (valence) level and the levels of the doping or co-coping rare earths (approx. a few eV). The charge carriers trapped in deep defects (engraved information) will be brought back into the conduction band, providing the system with energy equal to the depth of the trapping defect, within the forbidden band with respect to the conduction band of the matrix. The carriers will recombine in the luminescent centres (doping or co-doping ions), resulting in light emission (recorded data reading process).

The optical depth of the trapping defects will coincide, therefore, with the energy needed for releasing the trapped charge carriers. A light beam having such energy focused on the device will be able to verify if it was excited with energies capable of "writing" on the device and then "reading" the information previously stored in the device.

It should be noted that the device can be reused, in that after the "reading" process, which will be further described below, it will be possible to execute a subsequent "writing" step as previously described, thus preparing the device for reuse.

The processes of "reading" the previously stored datum exploit the same principle at the basis of the emptying of the charge carrier traps and the subsequent recombination in the luminescent centres.

The intensity $I_{OSL}$ of the light emitted after the luminous re-excitation can be defined as follows:

$$I_{OSL} = -\eta \frac{dm}{dt}$$

where η is the luminous efficiency, i.e. a parameter comprised between 0 and 1, assuming with this latter value that all recombinations are radiative, and m is the concentration of the trapping holes. Assuming that the crystal is in quasi-equilibrium conditions, i.e. that there are no unbound electrons in conduction band, and therefore that there is charge equilibrium, it can be assumed that dm\dt = dn\dt, where n indicates the concentration of the trapped electrons.

It follows that:

$$I_{OSL} = -\frac{dn}{dt}$$

Assuming that the recombinations of the photoexcited electrons occur in the luminescent centre, and therefore that there are no re-trapping effects (as previously described, this assumption is plausible only for certain ratios between trap density and emitter centre density), the following can be written:

$$I_{OSL} = n\phi(\lambda)\sigma(\lambda)$$

where $\phi(\lambda)$ indicates the optical excitation density of photostimulation and $\sigma(\lambda)$ is the photoionization cross-section. From the combination of the above formulae it is possible to predict an exponential trend of the photoinduced light, which is a function of the intensity of the incident beam and of the shock section:

$$I_{OSL} = I_{OSL0}\exp\left(-\frac{t}{\sigma(\lambda)\phi(\lambda)}\right)$$

and hence:

$$\sigma(\lambda) = \frac{1}{\phi(\lambda)}\frac{d(I_{OSL})}{dt}\frac{dt}{dn} = \frac{1}{\phi(\lambda)}\frac{d(I_{OSL})}{dt}\frac{1}{I_{OSL}}$$

It follows from the above that the product $\sigma(\lambda)\phi(\lambda)$ can be seen as the mean photoionization lifetime. As aforesaid, this model is valid when considering just one type of trapping centres. If multiple trap types are present, then an analogous reasoning will lead to a sum of exponentials, which will independently contribute to the cross-section, and hence the total value will be given by a weighted mean of all the values found for the different trap types.

Furthermore, if other processes competitive with trapping are taken into account, i.e. more or less deep traps, which are therefore in contact with the conduction band, the equation will take a different analytical form, increasing the precision of the reading process, i.e.:

$$I_{OSL} = I_{OSL0}e^{\left(-\frac{t}{\sigma(\lambda)\phi(\lambda)}\right)} + a1e^{\left(-\frac{E}{kT}\right)} - a2(t)$$

where $a1$ is a parameter that defines the weight of the traps located at an energy E from the conduction band (i.e. the depth of the traps), and the whole term will represent the probability that they are in contact with said band. The term a2 represents the time dependence of the traps themselves. In practice, these terms take into account the dependence on the temperature of the optically stimulated luminescence curve. Therefore, it is likely that, according to the temperature of interest, also the analytical curve of $I_{OSL}$ will vary its dependence considerably, giving a first indication about the natural fading of the device.

Finally, the possibility of re-trapping after photoionization in conduction band can be considered as an analytical stretched-exponential dependence, i.e. a term of the exponent that indicates the degree of re-trapping:

$$y = D + A^* \exp (x/B)C + G^* \exp (x/F)$$

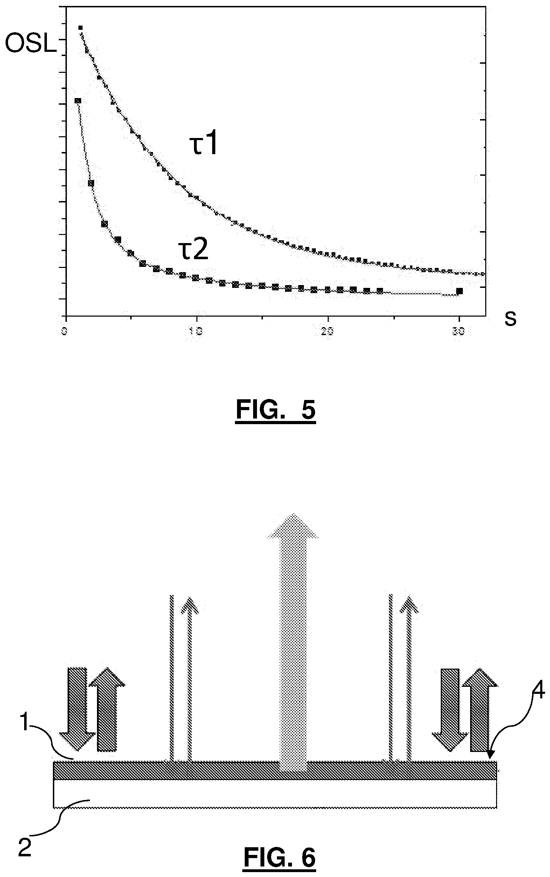

Figure 5 shows the experimental curve obtained on a sample of Ce:LYSO (lutetium and yttrium oxyorthosilicate) and C:Al$_2$O$_3$ and the resulting deconvolution curves. In the graph, the abscissas indicate the time in seconds s, and the ordinates indicate the OSL trend. The indicated lifetime $\tau$ is the one previously indicated as $\sigma(\lambda)\eta(\lambda)$, which provides the following estimate of the photoionization cross-section:

$$\sigma(514.5)_{C:Al_2O_3} = 4.5x10^{-19}cm^2 \quad (\lambda = 514.5 \text{ nm})$$

in the case of C:Al2O3 ($\tau$1 = 7.99 s), and

$$\sigma(514.5) = 1.6x10^{-18}cm^2$$

for the sample of Ce:LYSO ($\tau$2 = 2.19 s)

The following will provide further details about the compound materials employed and the formation thereof.

Two classes have been defined: Class 1 and Class 2.

**- Class 1:**

$Lu_{2-x}Y_xSiO_5$, where x is a number comprised between 0 and 2

*- **Class 2:***

$BaFX_{x-1}X'_x$, where X and X' refer to one of the elements of Cl, Br and I, and x is comprised between 0 and 1.

Both materials of both classes are already known to record information. However, within this framework they are applied for determining time and temperature conditions.

In the material class 1, the concentration of structural (doping) defects in the matrix of the active material, operating as trapping sites, is comprised between $10^{15}$ and $10^{20}$ traps/$cm^3$. The ideal concentration may be narrowed down to $10^{16}$ to $10^{19}$.

The dopant or co-dopant (meaning that they can be present either individually or together) are Ce and/or Tb at concentrations of 800-6,000 ppm, the optimal concentrations being in the range of 3,500 to 4,500 ppm.

A second co-dopant may be present at lower concentrations than the previous ones. The elements, which may be present either individually or at variable relative concentrations, are Pr, Nd, Sm, Eu, Gd, Dy, Ho, Er, Tm, Yb. Anyway, the total concentration may not exceed 200 - 4,500 ppm, the optimal concentrations being in the range of 1,000 to 3,000 ppm. At any rate, they must be lower than the total concentration of the previously described elements (Ce and/or Tb).

The materials must be grown in a reducing environment (argon or nitrogen).

In the material class 2, the concentration of structural defects in the matrix of the active material, operating as trapping (doping) sites, is comprised between $10^{15}$ and $10^{20}$ traps/$cm^3$. The ideal concentration may be narrowed down to $10^{16}$ to $10^{19}$.

The first doping element is $Eu^{2+}$, which is present at concentrations comprised between 200 and 8,000 ppm, with optimal concentrations of 4,000 to 5,000 ppm.

A second doping element is present, whether individually or at variable relative concentrations, selected among Na, K and Cs. The total concentration must be comprised between 0 and 5,000 ppm, the ideal concentration being in the range of 2,000 to 3,000 ppm. At any rate, the total concentration of these elements (Na, K e Cs) may not exceed that of $Eu^{2+}$.

The method of activation of the materials is optical, and occurs through excitation with electromagnetic waves having an energy comprised, for example, between 5 MeV and 3 eV, the optimal energy values being in the range of 10 eV to 4 eV (optical field, UV).

The reading method occurs through optical excitation (after activation) with electromagnetic wave energy comprised between 4 eV and 0.8 eV, the optimal energy values being in the range of 2.5 eV to 1.2 eV.

With reference to Figure 6, in a further exemplary embodiment the following results are attained.

The material can be charged ("write" step) with 30keV X-rays at 30 mA/s for 1 s.

In the "read" step, when read after 1 second ($I_0$), the optically stimulated luminescence signal, generated by a laser diode at 650 nm with a power of 10 mW for 1 s (focusing area of 0.25 $cm^2$), gives a value of 10,000 counts at 410 nm on an APD (Avalanche Photo Diode) phototube.

When read after 10,000 seconds, the optically stimulated luminescence signal, generated by a laser diode at 650 nm with a power of 10 mW for 1 s (focusing area of 0.25 $cm^2$), will give a value of 5 counts at 410 nm on the same APD phototube (same reading conditions as $I_0$).

Knowing that

$$I = I_0 e^{-\frac{t}{\tau}}$$

and defining

$$\tau = A/kT = \frac{\Delta E}{kT} \cdot \frac{1}{s}$$

where:

- k is the Boltzmann constant (8.617x10-5 eV K-1),
- T is the absolute temperature (in Kelvin degrees),
- s is the frequency factor, which represents the number of times per second that the electron tries to escape from the trap.

In BaFl:Eu, A =44,31 eV/s

A mean preservation temperature of approx. 272 K (-1 °C) will be obtained.

Optionally, the device may comprise a layer of material acting as an environmental light filter 4, which is applied over the layer of active material in order to avoid any adverse interference due to the presence of excessive environmental light.

The parameters can be summarized as follows:

Material: BaFl:Eu

Activation (charging, writing) of the label: 30keV X-rays at 30 mA/s for 1 s

Reading:

excitation: laser diode at 650 nm, power 10 mW, exposition time 1 s
detection of signal at 410 nm: APD photodiode

Stimulated luminescence counts at t=0 s, $I_0$=1,000
Stimulated luminescence counts at t= 10,000 s, I(t)=5

$$I = I_0 e^{\frac{t}{\tau}}$$

$$\tau = A/kT = \frac{\Delta E}{kT} \cdot \frac{1}{s}$$

- k is the Boltzmann constant (8.617x10-5 eV K-1),
- T is the absolute temperature (in Kelvin degrees),
- s is the frequency factor, which represents the number of times per second that the electron tries to escape from the trap.

In BaFl:Eu A =44,31 eV/s

Gives a mean preservation temperature of approx. 272 K (-1 °C).

## Claims

1.  Label-shaped device adapted to be applied onto an object for monitoring the time trend of the temperature of the object, said device comprising:

    a support substrate (1) and a layer of active material (2) applied onto the support, said device being **characterized in that**: said active material comprises solid solutions of oxyorthosilicates and/or barium halide salts, doped with rare earths and/or metals selected in the group of Na, K and/or Cs; said oxyorthosilicates comprising $Lu_{2-x}Y_xSiO_5$, where x is a number comprised between 0 and 2, and said barium halide salts comprising $BaFX_{x-1}X'_x$, where X and X' refer to one of elements selected from Cl, Br and I, and x is comprised between 0 and 1; said active material being adapted to provide:

- a first indicator, as immediate visual information associated with the progressive change in colour related to the threshold temperature, based on the progressive variation in the reflectivity of said material as a function of time and temperature, and
- a second indicator, based on an optically stimulated luminescence response (OSL) related to the temperature/time condition to which the object has been subjected in a given period of time, starting from an initially absorbed dose of electromagnetic radiation having an energy exceeding a minimum value dependent on the difference between energetic levels of the molecular structure of said material.

2. Device according to claim 1, wherein said oxyorthosilicates are doped at a concentration comprised between $10^{15}$ and $10^{20}$ traps/cm$^3$, preferably between $10^{16}$ and $10^{19}$ traps/cm$^3$, said dopants comprising Ce and/or Tb at concentrations of 800-6,000 ppm, preferably at concentrations of 3,500 to 4,500 ppm, grown in a reducing environment.

3. Device according to claim 2, wherein said dopants further comprise Pr, Nd, Sm, Eu, Gd, Dy, Ho, Er, Tm, Yb, whether individually or at variable relative concentrations, the total concentration not exceeding 200 - 4,500 ppm and being preferably in the range of 1,000 to 3,000 ppm.

4. Device according to claim 1, wherein said barium halide salts are doped at a concentration comprised between $10^{15}$ and $10^{20}$ traps/cm$^3$, preferably between $10^{16}$ and $10^{19}$ traps/cm$^3$, said dopants comprising Eu$^{2+}$ at concentrations comprised between 200 and 8,000 ppm, preferably at concentrations between 4,000 and 5,000 ppm.

5. Device according to claim 4, wherein said dopants further comprise Na, K and/or Cs, whether individually or at variable relative concentrations, the total concentration being comprised between 0 and 5,000 ppm, preferably between 2,000 and 3,000 ppm, without exceeding said concentration of Eu$^{2+}$.

6. Method for monitoring the time trend of the temperature of an object by using a device according to any one of the preceding claims, **characterized in that** it comprises the steps of:

   - applying an initial dose of electromagnetic radiation to said active material having an energy exceeding a minimum value dependent on the difference between energetic levels of the molecular structure of said material;
   - measuring the response of said active material to an optically stimulated luminescence operation (OSL) related to the temperature/time condition to which the object has been subjected in a given period of time, so as to obtain said time trend of the temperature of the object.

7. Method according to claim 6, wherein said response measurement is taken according to the following relation:

$$I_{OSL} = I_{OSL0} \exp\left(-\frac{t}{\sigma(\lambda)\phi(\lambda)}\right)$$

where $I_{OSL}$ is the intensity of the light emitted by said active material, $\Phi(\lambda)$ indicates the optical excitation density of photostimulation, $\sigma(\lambda)$ is the photoionization cross-section of the active material, and the product $\sigma(\lambda)\Phi(\lambda)$ indicates the mean photoionization lifetime.

**Patentansprüche**

1. Etikettenförmige Vorrichtung, der angepasst ist um auf ein Objekt zur Überwachung des zeitlichen Verlaufs der Temperatur von dem Objekt angewandt zu werden, wobei die Vorrichtung umfasst:

   ein Stützsubstrat (1) und eine Schicht aus aktivem Material (2), die auf dem Träger aufgebrachten ist, wobei das aktive Material feste Lösungen von Oxyorthosilikate und/oder Barium-Halogenid-Salze umfasst, die mit seltenen Erden und/oder Metallen aus der Gruppe von Na, K und/oder Cs dotiert sind; wobei die Oxyorthosilikate Lu$_{2-x}$Y$_x$SiO$_5$ umfassen, wobei x ist eine Zahl zwischen 0 und 2, und die BariumhalogenidSalze BaFX$_{x-1}$X'$_x$ umfassen, wobei X und X' beziehen sich auf eines der aus Cl, Br und I ausgewählten Elemente, und x zwischen 0 und 1 liegt;
   wobei das aktive Material angepasst wird, um Folgendes bereitzustellen:

- einen ersten Indikator, als unmittelbare visuelle Information assoziiert mit der fortschreitenden Änderung in Farbe, die der Schwellentemperatur entspricht, bezogen auf der fortschreitende Veränderung in der Reflektivität des genannten Materials als eine Funktion von Zeit und Temperatur, und

- einen zweiten Indikator, basierend auf einer optisch stimulierten Lumineszenz-Antwort (OSL) bezogen auf dem Temperatur/Zeit-Zustand auf den das Objekt in einem gegebenen Zeitraum unterworfen wurde, ausgehend von einer anfänglich absorbierten Dosis von elektromagnetischer Strahlung mit einer Energie, die einen Mindestwert überschreitet, der aus der Differenz zwischen energetischen Niveaus der Molekularstruktur des Materials abhängt.

2. Vorrichtung nach Anspruch 1, wobei die Oxyorthosilikate in einer Konzentration zwischen $10^{15}$ und $10^{20}$ Fallen/cm$^3$, vorzugsweise zwischen $10^{16}$ und $10^{19}$ Fallen/cm$^3$ dotiert sind, wobei die Dotierungsmitteln Ce und/oder Tb bei Konzentrationen von 800-6.000 ppm, vorzugsweise in Konzentrationen von 3.500 bis 4.500 ppm umfassen, die in einer reduzierenden Umgebung gezüchtet sind.

3. Vorrichtung nach Anspruch 2, wobei das Dotierungsmittel weisen ferner Pr, Nd, Sm, Eu, Gd, Dy, Ho, Er, Tm, Yb auf, ob einzeln oder in variablen relativen Konzentrationen, wobei die Gesamtkonzentration nicht mehr als 200-4.500 ppm umfasst und vorzugsweise im Bereich von 1.000 bis 3.000 ppm liegt.

4. Vorrichtung nach Anspruch 1, wobei die Bariumhalogenidsalze in einer Konzentration dotiert sind, die zwischen $10^{15}$ und $10^{20}$ Fallen/cm$^3$, vorzugsweise zwischen $10^{16}$ und $10^{19}$ Fallen/cm$^3$ umfasst, wobei die Dotierungsmittel Eu2+ in Konzentrationen umfassen, die zwischen 200 und 8.000 ppm, vorzugsweise in Konzentrationen zwischen 4.000 und 5.000 ppm, liegen.

5. Vorrichtung nach Anspruch 4, wobei die Dotierungsmittel weiter Na, K und/oder Cs, ob einzeln oder in variablen relativen Konzentrationen umfassen, wobei die Gesamtkonzentration zwischen 0 und 5. 000 ppm, vorzugsweise zwischen 2.000 und 3.000 ppm, liget, ohne die Überschreitung Konzentration von Eu$^{2+}$ zu überschreiten.

6. Verfahren zur Überwachung des zeitlichen Temperaturtrends eines Objekts durch Verwendung einer Vorrichtung nach irgendeinem der vorangehenden Ansprüche, **dadurch gekennzeichnet, dass** es die folgenden Schritte umfasst:

- Anwendung einer Anfangsdosis elektromagnetischer Strahlung auf das aktive Material, dessen Energie einen Mindestwert überschreitet, der von der Differenz zwischen den energetischen Niveaus der Molekülstruktur des Materials abhängt;

- Messung der Antwort von dem aktiven Material zu einem optisch stimulierten Lumineszenz-Betrieb (OSL) auf die Temperatur/Zeit-Bedingung, der das Objekt in einem bestimmten Zeitraum unterzogen wurde, um derart den Zeittrend der Temperatur des Objekts, zu erhalten.

7. Verfahren nach Anspruch 6, wobei die Messung der Antwort entsprechend folgender Beziehung genommen wird:

$$I_{OSL} = I_{OSL0} \exp\left(-\frac{t}{\sigma(\lambda)\phi(\lambda)}\right)$$

wo $I_{OSL}$ ist die Intensität des Lichtes, die vom aktiven Material emittiert wird, $\Phi(\lambda)$ zeigt die optische Anregungsdichte von Photostimulation, $\sigma(\lambda)$ ist der Photoionisations-Querschnitt des aktiven Materials, und das Produkt $\sigma(\lambda)\Phi(A)$ gibt die mittlere Photoionisationslebensdauer an.

**Revendications**

1. Dispositif en forme d'étiquette adapté pour être appliqué sur un objet pour surveiller la tendance temporelle de la température de l'objet, ledit dispositif carprenant:

un substrat de support (1) et une couche de matière active (2) appliquée sur le support, ladite matière active comprenant des solutions solides d'oxyorthosilicates et/ou de sels d'halogénure de baryum, dopées avec des terres rares et/ou des métaux choisis dans le groupe de Na, K et/ou Cs; lesdits oxyorthosilicates comprenant

$Lu_{2-x}Y_xSiO_5$, où x est un nombre compris entre 0 et 2, et lesdits sels de halogénure de baryum comprenant $BaFX_{x-1}X'_x$, où X et X' se réfèrent à un des éléments sélectionnés à partir de Cl, Br et I, et x est compris entre 0 et 1; ladite matière active étant adapté pour fournir:

- un premier indicateur, comme une information visuelle immédiate associée avec le progressif changement de couleur lié à la température de seuil, en fonction de la variation progressive de la réflectivité de ladite matière comme une fonction de temps et de température, et
- un deuxième indicateur, basé sur une réponse de luminescence optiquement stimulée (OSL) liée à la condition de température/temps à laquelle l'objet a été soumis pendant une période de temps donnée, à partir d'une dose initialement absorbée de rayonnement électromagnétique ayant une énergie dépassant une valeur minimale dépendante de la différence entre les niveaux énergétiques de la structure moléculaire de ladite matière.

2. Dispositif selon la revendication 1, dans lequel lesdits oxyorthosilicates sont dopés à une concentration comprise entre $10^{15}$ et $10^{20}$ pièges/$cm^3$, de préférence entre $10^{16}$ et $10^{19}$ pièges/$cm^3$, lesdits dopants comprenant Ce et/ou Tb à des concentrations de 800-6000 ppm, de préférence à des concentrations de 3.500 à 4.500 ppm, cultivées dans un environnement réduisant.

3. Dispositif selon la revendication 2, dans lequel lesdits dopants comprennent en outre Pr, Nd, Sm, Eu, Gd, Dy, Ho, Er, Tm, Yb, que ce soit individuellement ou avec des concentrations relatives variables, la concentration totale ne dépassant 200-4.500 ppm et étant de préférence comprise entre 1.000 et 3000 ppm.

4. Dispositif selon la revendication 1, dans lequel lesdits sels d'halogénure de baryum sont dopés à une concentration comprise entre $10^{15}$ et $10^{20}$ pièges/$cm^3$, de préférence entre $10^{16}$ et $10^{19}$ pièges/$cm^3$, lesdits dopants comprenant $Eu^{2+}$ à des concentrations comprises entre 200 et 8.000 ppm, de préférence à des concentrations comprises entre 4.000 et 5.000 ppm.

5. Dispositif selon la revendication 4 , dans lequel lesdits dopants comprennent en outre Na, K et/ou Cs, soit individuellement soit à des concentrations relatives variables, la concentration totale étant comprise entre 0 et 5.000 ppm, de préférence entre 2.000 et 3.000 ppm, sans dépasser ladite concentration de $Eu^{2+}$.

6. Procédé de surveillance de l'évolution temporelle de la température d'un objet en utilisant un dispositif selon l'une quelconque des revendications précédentes, **caractérisé en ce qu'**il comprend les étapes de:

- appliquer une dose initiale de rayonnement électromagnétique à ladite matière active ayant une énergie dépassant une valeur minimale dépendante de la différence entre les niveaux énergétiques de la structure moléculaire de ladite matière;
- mesurer la réponse de ladite matière active à une opération de luminescence optiquement stimulée (OSL) liée à la condition de température/temps à laquelle l'objet a été soumis à une donnée période de temps, pour obtenir ladite tendance temporaire de la température de l'objet.

7. Procédé selon la revendication 6, dans lequel ladite mesure de réponse est prise selon la relation suivante:

$$I_{OSL} = I_{OSL0} \exp\left(-\frac{t}{\sigma(\lambda)\phi(\lambda)}\right)$$

où $I_{OSL}$ est l'intensité de la lumière émise par ladite matière active, $\Phi(\lambda)$ indique la densité d'excitation optique de la photostimulation, $\sigma(\lambda)$ est la section transversale de photoionisation de la matière active, et le produit $\sigma(\lambda)\Phi(\lambda)$ indique la durée de vie moyenne de photoionisation.

1

3

2

**FIG. 1**

1

2

**FIG. 2**

**FIG. 3**

**FIG. 4**

**FIG. 5**

**FIG. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010074297 A1